# EUROPÄISCHE PATENTSCHRIFT

(11) **EP 3 150 458 B1**
(45) Veröffentlichungstag und Bekanntmachung des Hinweises auf die Patenterteilung: **03.01.2018**
(21) Anmeldenummer: 16190801.7
(22) Anmeldetag: 27.09.2016
(51) Int. Cl.: B61H 15/00, F16D 65/18

(54) **BREMSZYLINDER MIT INTEGRIERTEM VERSCHLEISSNACHSTELLER FÜR SCHIENENFAHRZEUGE**
BRAKE CYLINDER WITH INTEGRATED WEAR ADJUSTER FOR RAIL VEHICLES
CYLINDRE DE FREIN AVEC AJUSTAGE D'USURE INTÉGRÉ POUR VÉHICULES SUR RAIL

(30) Priorität: 29.09.2015 DE 102015218815; 01.10.2015 DE 102015219058
(43) Veröffentlichungstag der Anmeldung: 05.04.2017
(73) Patentinhaber: KES Keschwari Electronic Systems GmbH & Co. KG, 30890 Barsinghausen (DE)
(72) Erfinder: Keschwari Rasti, Mahmud, 30890 Barsinghausen (DE)
(74) Vertreter: Taruttis, Stefan Georg

(56) Entgegenhaltungen:
- DE-A1- 1 680 381
- DE-A1- 4 330 440
- DE-B1- 1 530 260
- DE-C1- 19 509 540

## Beschreibung

Die vorliegende Erfindung betrifft eine Bremszange für eine Scheibenbremse bzw. eine Scheibenbremse mit einer Bremszange für Schienenfahrzeuge. Die Bremszange weist Zangenarme auf, an denen endständig Bremsbacken angebracht sind und die durch einen Bremszylinder gegeneinander schwenkbar angetrieben sind. Die erfindungsgemäße Bremszange bzw. Scheibenbremse hat den Vorteil, dass der Bremszylinder und der Verschleißnachsteller in einem gemeinsamen Gehäuse enthalten sind und dass der Verschleißnachsteller entlang derselben linearen Bewegungsachse wirkt, wie die Kraft, die zwischen zwei Trägern erzeugt wird, die schwenkbar mit den Zangenarmen verbunden sind und diese zur Verschwenkung antreiben, um die Bremsbacken gegeneinander zu spannen.

### Stand der Technik

Die DE 195 09 540 C1 beschreibt eine Bremszange für eine Scheibenbremse, deren Zangenarme durch einen etwa mittig an einem der Zangenarme exzentrisch gelagerten Dreharm gegeneinander verschwenkt werden, der durch einen Bremszylinder gedreht wird. Gegenüber den endständig an den Zangenarmen angebrachten Bremsbacken ist zwischen den Enden der Zangenarme ein Verschleißnachsteller mit einer Spindel angeordnet, die dadurch ausgefahren wird, dass die Spindelmutter durch eine Steuerstange gedreht wird, die sich entlang eines Zangenarms erstreckt und über einen Hebelarm angetrieben ist, der am Dreharm angeordnet ist.

Die DE 43 30 440 A1 beschreibt eine Bremszange für eine Scheibenbremse, an deren Zangenarmen etwa mittig eine Anordnung aus einem Kraftspeicher angreift, der durch eine Verstellvorrichtung geschwenkt wird und über eine Steuerkurve auf einen Kipphebel wirkt, so dass die Zangenarme und die an einem Ende angebrachten Bremsbacken aufeinander zu geschwenkt werden. An dem Zangenende gegenüber den Bremsbacken ist ein Verschleißnachsteller angeordnet, der ein Getriebe und einen Stellmotor aufweist.

Der vorgenannte Stand der Technik hat den Nachteil, dass ein Verschleißnachsteller an einem Ende der Zangenarme gegenüber den Bremsbacken angeordnet ist, während die Krafterzeugungseinrichtung der Bremszange etwa mittig an den Zangenarmen angreift.

Die EP 2 154 391 B1 beschreibt eine Krafterzeugungseinrichtung einer Bremszange mit einem Bremszylinder, der auf einen Keil wirkt, der zwischen zwei Rollen geführt ist, um diese entlang einer linearen Bewegungsachse gegeneinander zu verschieben, die auf Träger wirken, die in der linearen Bewegungsachse liegen und endständig an Armen einer Bremszange angelenkt sind. Die eine Rolle wirkt auf eine Spindel, die in der linearen Bewegungsachse liegt und eine Spindelmutter aufweist, die abhängig von der Bewegung der Spindel gegen ein Gehäuse von einer bei dieser Bewegung komprimierten Feder gedreht wird und einen Verschleißnachsteller bildet.

### Aufgabe der Erfindung

Der Erfindung stellt sich die Aufgabe, eine alternative Bremszange für eine Scheibenbremse bereitzustellen, insbesondere eine Bremszange mit einem alternativen Verschleißnachsteller, der bevorzugt in einem gemeinsamen Gehäuse mit einem Bremszylinder angeordnet ist und insbesondere eine Krafterzeugungseinrichtung mit einem Verschleißnachsteller in einem Gehäuse aufweist. Weiter bevorzugt soll die Bremszange eine direkte Messung der auf die Zangenarme wirkenden Kraft erlauben, die durch den auf den Bremszylinder wirkenden Druck erzeugt wird.

### Beschreibung der Erfindung

Die Erfindung löst die Aufgabe mit den Merkmalen der Ansprüche, insbesondere mit einer Bremse bzw. Bremszange, die an den Enden ihrer zwei Zangenarme jeweils Bremsbacken aufweist. An dem Ende der Zangenarme gegenüber den Bremsbacken ist zwischen den Zangenarmen eine Krafterzeugungseinrichtung angeordnet und zwischen den Enden der Zangenarme eine Verbindung, z.B. etwa mittig, um die die Zangenarme schwenkbar sind.

Die Krafterzeugungseinrichtung ist mit einem ersten Träger, der am ersten Ende eines Gehäuses angeordnet ist und einem zweiten Träger, der am gegenüberliegenden zweiten Ende des Gehäuses angeordnet ist, an den Zangenarmen angelenkt. Der erste und zweite Träger sind auf einer gemeinsamen linearen Bewegungsachse angeordnet, entlang derer die Träger voneinander weg durch die Kraft eines Kolbens bewegt werden. Der erste Träger weist einen Stumpf auf, der längsverschieblich und verdrehsicher bzw. drehfest in einer Führung eines Gehäuses geführt ist. Der zweite Träger ist am Gehäuse festgelegt. Das erste Ende einer Spindel ist drehbar am Stumpf des ersten Trägers gelagert. Die Achse der Spindel liegt koaxial zur linearen Bewegungsachse und koaxial zur Längsachse des Stumpfs. Die Spindel ist in einer Spindelmutter geführt, die verdrehsicher bzw. drehfest und parallel zur linearen Bewegungsachse verschieblich in dem Gehäuse geführt ist. Die Spindelmutter ist durch einen Kolben parallel zur linearen Bewegungsachse verschieblich angetrieben, so dass die Spindelmutter und mit ihr die Spindel durch den Kolben entlang der linearen Bewegungsachse verschieblich ist, und mit der Spindel der Stumpf des ersten Trägers in seiner Führung verschieblich ist.

Generell ist der Zylinder, in dem der Kolben geführt ist, mit Druck der Bremse beaufschlagbar, z.B. mit Druck der Betriebsbremse.

Die Krafterzeugungseinrichtung zeichnet sich bevorzugt dadurch aus, dass in dem Gehäuse ein Sensor angeordnet ist, der eingerichtet ist, den Weg und/oder die Stellung der Spindel entlang der linearen Bewegungsachse in dem Zustand aufzunehmen, in dem die Bremsbacken einen Abstand voneinander einnehmen, in dem die Bremsbeläge an einer Bremsscheibe anliegen. Generell zeichnet sich die Krafterzeugungseinrichtung dadurch aus, dass ein Motor, der z.B. ein Elektromotor, ein pneumatischer oder hydraulischer Motor ist, in dem Gehäuse angeordnet ist, der die Spindel zur Drehung antreibt. Der Motor bildet den Antrieb für die Drehung der Spindel. Der Motor kann ein elektrischer, hydraulischer oder pneumatischer Drehantrieb oder Linearantrieb sein. Ein hydraulischer Motor kann z.B. ein Hydraulikzylinder oder ein hydraulischer Linearmotor oder Rotationsmotor sein, ein pneumatischer Motor kann z.B. ein Pneumatikzylinder oder ein pneumatischer Linearmotor oder Rotationsmotor sein.

Nachfolgend wird ein Elektromotor stellvertretend für einen Motor genannt. Der Elektromotor ist bevorzugt abhängig von einem Signal des Sensors für die Stellung und/oder den Weg der Spindel im Gehäuse gesteuert. Durch Drehung der Spindel durch den Elektromotor wird diese und damit der Stumpf des ersten Trägers entlang der linearen Bewegungsachse gegenüber der Spindelmutter verschoben. Die Verschieblichkeit der Spindelmutter und mit ihr der Spindel und des Stumpfs des ersten Trägers entlang der linearen Bewegungsachse durch den Kolben wird durch die Drehung der Spindel nicht geändert. So wirkt die Drehung der Spindel zur Einstellung des Abstands zwischen erstem und zweitem Träger zur Verschleißnachstellung, wobei der Kolben die Spindelmutter verschiebt, um eine Betriebsbremse zu bilden. Bevorzugt ist der Elektromotor gesteuert, die Spindel nur in einem Zustand zu drehen, in dem der Kolben, der die Betriebsbremse bildet, nicht durch Druck belastet ist. Der Elektromotor ist bevorzugt abhängig von dem Signal des Sensors gesteuert und bildet mit der Spindel einen Verschleißnachsteller. Da der Verschleißnachsteller innerhalb des Gehäuses angeordnet ist und in den Antrieb zwischen den Trägern integriert ist, hat die erfindungsgemäße Krafterzeugungseinrichtung den Vorteil, dass kein Gestängesteller außerhalb dieses Gehäuses, der z.B. in einem Abstand zur Krafterzeugungseinrichtung an den Zangenarmen angreift, vorhanden ist.

Der Elektromotor ist vorzugsweise abhängig vom Signal des Sensors gesteuert, dass er die Spindel nur bei Überschreitung eines vorgegebenen Wegs der Spindelmutter im Gehäuse dreht, insbesondere zur Drehung der Spindelmutter um den Betrag eingerichtet ist, der eine Verschiebung der Spindelmutter um den Betrag der Überschreitung des vorgegebenen Wegs bewirkt. Zusätzlich oder alternativ ist der Elektromotor vorzugsweise gesteuert, die Spindel in eine Stellung entlang der linearen Bewegungsachse zu bewegen, in der die Träger durch Druckbeaufschlagung des Kolbens nur um einen vorgegebenen maximalen Weg voneinander weg bewegt werden, z.B. bis die Träger die Zangenarme der Bremse soweit bewegt haben, bis die Bremsbacken einen Abstand voneinander einnehmen, in dem die Bremsbeläge einen vorbestimmten Abstand von der Bremsscheibe haben.

Der Elektromotor ist z.B. ortsfest in dem Gehäuse festgelegt, insbesondere mit seinem Wellenstumpf, optional mittels eines Getriebes, koaxial zur Achse der Spindel angeordnet und mit dieser drehfest verbunden. Bevorzugt ist der Elektromotor am zweiten Ende innerhalb des Gehäuses angeordnet. Für die Zwecke der Erfindung kann der Elektromotor ein Getriebe aufweisen oder enthalten, das z.B. den Wellenstumpf treibt. Bevorzugt ist der Elektromotor ein Schrittmotor. Bevorzugt ist der Elektromotor gesteuert, die Spindel nur dann zu drehen, wenn der Kolben nicht mit Druck beaufschlagt ist, z.B. im gelösten Zustand der Bremse.

Die Spindel ist längsverschieblich mit dem Elektromotor verbunden, um die Längsverschiebung der Spindel bei Bewegung der Spindelmutter entlang der linearen Bewegungsachse zuzulassen, die durch den Kolben angetrieben wird. Dazu ist der Wellenstumpf des Elektromotors, direkt oder mittels eines Getriebes, koaxial und längsverschieblich zur Spindel angeordnet und z.B. mittels entlang der Spindelachse verschieblicher Eingriffsmittel drehfest mit der Spindel verbunden, insbesondere am zweiten Ende der Spindel, das ihrem ersten Ende und dem Stumpf des ersten Trägers gegenüberliegt. Ein solches Eingriffsmittel kann z.B. aus einem Längsschlitz in einem von Spindel und Wellenstumpf und ein in dem Längsschlitz geführter Zapfen in dem anderen von Spindel und Wellenstumpf sein. Der Wellenstumpf kann koaxial innerhalb oder außerhalb der Spindel angeordnet sein. Bevorzugt ist der Wellenstumpf des Elektromotors in einer koaxialen Bohrung der Spindel an deren zweiten Ende längsverschieblich und verdrehsicher geführt, z.B. mittels zweier Zapfen des Wellenstumpfs, die in Längsschlitzen der Spindel verschieblich geführt sind.

Der Sensor ist bevorzugt mit einer Datenleitung mit einem elektronischen Mikrokontroller verbunden, der eingerichtet ist, den Elektromotor abhängig von einem Signal des Wegaufhehmers zu steuern.

In einer Variante ist der Sensor ein Wegaufnehmer, der eingerichtet ist, den Weg und/oder die Stellung der Spindelmutter entlang der linearen Bewegungsachse aufzunehmen, insbesondere den Weg der Spindelmutter, über den diese bei Beaufschlagung des Kolbens mit Druck bewegt wird und/oder die Stellung der Spindelmutter, die diese bei Beaufschlagung des Kolbens mit Druck einnimmt. Da die Spindel mit der Spindelmutter in Eingriff steht, ist der Weg bzw. die Stellung der Spindelmutter durch Beaufschlagung des Kolbens mit Druck gleich dem Weg bzw. der Stellung der Spindel, wobei der Elektromotor steht bzw. die Spindel nicht gedreht wird. Der Wegaufnehmer ist bevorzugt ein berührungsfreier.

In einer anderen Variante ist der Sensor ein Kraftsensor, der eingerichtet ist, die Kraft zwischen dem ersten Ende der Spindel und dem Stumpf des ersten Trägers aufzunehmen. Dabei ist bevorzugt, dass ein Mikrokontroller, der den Elektromotor steuert, eingerichtet ist, in Abwesenheit von Druck auf den Kolben den Elektromotor zur Drehung der Spindel zu steuern, bis der Kraftsensor eine von der Spindel auf den Stumpf wirkende, steil ansteigende Kraft als Signal für einen Abstand der Bremsbacken aufnimmt, in dem daran angebrachte Bremsbeläge an einer Bremsscheibe anliegen, und der Mikrokontroller eingerichtet ist, den Elektromotor anschließend zur Drehung der Spindel in Gegenrichtung um einen vorbestimmten Betrag zu steuern. In dieser Variante ist die Bremse dadurch zur Verschleißnachstellung eingerichtet, dass in dem Zustand, in dem der Kolben nicht die Spindelmutter belastet, der Elektromotor die Spindel dreht, bis der Kraftsensor dadurch die Stellung der Bremsbeläge anliegend an einer Bremsscheibe anzeigt, dass die Kraft zwischen der Spindel und dem Stumpf des ersten Trägers steil ansteigt. In dieser Stellung der Spindel liegen die Bremsbeläge an der Bremsscheibe an. Daher ist der Mikrokontroller eingerichtet, den Elektromotor zur Drehung der Spindel in Gegenrichtung zu steuern, so dass ohne Druckbeaufschlagung des Kolbens die Spindel in einer Stellung längs der linearen Bewegungsachse ist, in der sie keine Kraft zwischen den Trägern ausübt und die Bremsbeläge in einem Abstand von der Bremsscheibe liegen. Die Drehung der Spindel in Gegenrichtung führt zur Bewegung der Spindel in Richtung auf das zweite Ende des Gehäuses. Die Drehung der Spindel in Gegenrichtung erfolgt insbesondere um einen vorbestimmten Betrag, so dass die Spindel die Zangenarme und daher auch die Bremsbeläge in einen vorbestimmten Abstand zueinander bringt. So kann die Drehung der Spindel in Gegenrichtung erfolgen bis z.B. die Bremsbeläge jeweils einen vorbestimmten Abstand zueinander einnehmen, in dem sie einen vorbestimmten Abstand von der Bremsscheibe einnehmen.

Der Zustand, in dem der Kolben die Spindelmutter nicht belastet, ist insbesondere ein Zustand, in dem der Zylinder, in dem der Kolben geführt ist, nicht mit Druck beaufschlagt ist und der Kolben auch nicht mittels eines Fortsatzes durch einen zweiten Kolben belastet wird, der z.B. in Abwesenheit von Betriebsdruck mittels einer zweiten Druckfeder gegen den Kolben belastet wird.

Bevorzugt ist eine Druckfeder zwischen dem ersten Ende des Gehäuses und der Spindelmutter angeordnet, die die Spindelmutter vom ersten Ende weg und in Richtung auf das zweite Ende des Gehäuses belastet. Eine solche Druckfeder bildet eine Rückstellfeder für die Spindelmutter, die entgegen der durch den Kolben aufgebrachten Verschiebung wirkt. Diese Druckfeder kann auch als Rückstellfeder für die Spindel und/oder als Rückstellfeder für die Betriebsbremse bezeichnet werden.

Optional, insbesondere in der zweiten Variante, ist zwischen dem Stumpf des ersten Trägers und der Spindel ein Kraftsensor angeordnet, um die Kraft zu messen, mit der die Spindel den Stumpf belastet. Der Kraftsensor kann in einem Spalt zwischen der Spindel und dem Stumpf des ersten Trägers angeordnet sein, wobei der Spalt bzw. der Kraftsensor angeordnet ist, die Kraft entlang der linearen Bewegungsachse aufzunehmen. Dabei kann die Spindel, insbesondere deren erstes Ende, koaxial, drehbar und längs der linearen Bewegungsachse verschieblich an dem Stumpf gelagert sein. Bevorzugt weist das Gehäuse an seinem ersten Ende eine gemeinsame Führung für den Stumpf und die Spindel auf. Optional weisen der Stumpf und die Spindel innerhalb einer gemeinsamen Führung denselben Außendurchmesser auf.

Weiter optional kann ein Drucksensor in dem Zylinder angeordnet sein, in dem der Kolben geführt ist, um den auf den Kolben wirkenden Druck aufzunehmen. Der Drucksensor und der Kraftsensor sind bevorzugt mit einem elektronischen Mikrokontroller verbunden, der eingerichtet ist, das Messsignal des Kraftsensors mit dem Messsignal des Drucksensors zu vergleichen, und ist weiter bevorzugt eingerichtet, Abweichungen des Verhältnisses zwischen dem Messsignal des Kraftsensors und dem Messsignal des Drucksensors von einem vorbestimmten Wert oder Wertebereich anzuzeigen. In dieser Ausführung ist die Bremse eingerichtet, eine Fehlfunktion anzuzeigen, z.B. eine zu geringe Kraft bei im Zylinder anliegendem Druck.

Weiter optional kann der Mikrokontroller eingerichtet sein, den Weg zu bestimmen, um den die Spindel durch Drehung mittels des Elektromotors in Richtung auf das erste Ende bewegt wurde und bevorzugt das Erreichen eines vorbestimmten Wegs anzuzeigen, um den die Spindel in der Spindelmutter durch Drehung bewegt wurde. In dieser Ausführungsform ist die Bremse eingerichtet, das Erreichen eines vorbestimmten Verschleißes der Bremsbacken bzw. darauf angebrachter Bremsbeläge anzuzeigen. Dabei ist der Mikrokontroller bevorzugt eingerichtet, die jeweiligen Wege, um die die Spindel durch Drehung mittels des Elektromotors in Richtung auf das erste Ende des Gehäuses bewegt wird, aufzuaddieren und optional anzuzeigen, zu übermitteln und/oder mit einem vorgegebenen Wert zu vergleichen, wobei der vorgegebene Wert einem zulässigen Verschleiß der Bremsbeläge entspricht. Bevorzugt werden die jeweiligen Wege, um die die Spindel durch Drehung mittels des Elektromotors in Richtung auf das erste Ende des Gehäuses bewegt wird, durch den Wegaufnehmer bestimmt.

Weiter optional kann der Mikrokontroller eingerichtet sein, bei Anbringen von neuen Bremsbelägen, die eine vorbestimmte Dicke aufweisen, den Weg der Spindelmutter zu bestimmen, den diese bei anliegendem Bremsdruck in Richtung auf das erste Ende des Gehäuses zurücklegt und diesen Weg zu übermitteln, wobei dieser Weg als Maß für den Verschleiß der Bremsscheibe angezeigt werden kann. Dazu kann der Weg der Spindelmutter durch den Sensor bestimmt werden, der in einer Variante ein Wegaufnehmer ist, der den Weg der Spindelmutter im Gehäuse aufnimmt. Alternativ kann der Sensor, wie hier beschrieben, durch einen zwischen der Spindel und dem Stumpf des ersten Trägers angeordneten Kraftsensor gebildet werden, wobei der Mikrokontroller eingerichtet ist, die Drehungen, die der Elektromotor auf die Spindel überträgt, aufzunehmen und daraus den Weg zu berechnen, über den die Spindel entlang der linearen Bewegungsachse bewegt wird, bis der Kraftsensor durch eine steil ansteigende Kraft das Anliegen der Bremsbeläge an der Bremsscheibe anzeigt.

Bevorzugt ist der Mikrokontroller eingerichtet, z.B. mittels einer Elektronik, mit dem Bremssystem eines Schienenfahrzeugs verbunden zu werden, um Daten zu übermitteln. Dazu kann der Mikrokontroller z.B. eine Elektronik aufweisen, die ein Bussystem bildet, das kabellos oder kabelgebunden sein kann.

Die Krafterzeugungseinrichtung kann eine manuelle Steuerung aufweisen, mit der der Elektromotor zur Drehung der Spindel in ihre Stellung nahe am zweiten Ende des Gehäuses verfahren wird, um in dieser Stellung die Bremszange zu öffnen und die Bremsbeläge auszutauschen. Zusätzlich kann die Krafterzeugungseinrichtung eine manuelle Steuerung aufweisen, mit der der Elektromotor zur Drehung der Spindel gesteuert wird, um diese in eine Stellung zu verfahren, in der die Bremsbeläge einen vorbestimmten Abstand zueinander bzw. zu einer zwischen ihnen angeordneten Bremsscheibe aufweisen. In dieser Ausführungsform erlaubt die Krafterzeugungseinrichtung ein motorisches Verfahren der Bremszange in eine geöffnete Stellung und bevorzugt ein motorisches Verfahren der Bremszange in eine Stellung der Bremsbeläge in einen gewünschten Abstand zueinander bzw. zu einer Bremsscheibe.

In einer ersten Ausführungsform kann der Kolben, der generell auch als Bremskolben bezeichnet wird und gesteuert mit Druck beaufschlagbar ist, um eine Betriebsbremse zu bilden, auf einen Keil wirken, der zwischen dem zweiten Ende der Spindel bzw. zwischen der Spindelmutter einerseits und dem zweiten Ende des Gehäuses andererseits wirkt, so dass die Spindel bzw. die Spindelmutter vom zweiten Ende des Gehäuses auf das erste Ende des Gehäuses entlang der linearen Bewegungsachse verschoben wird. Bevorzugt weist die Spindelmutter eine erste Andruckrolle auf, deren Drehachse senkrecht zur Spindelachse bzw. zur linearen Bewegungsachse angeordnet ist und am Gehäuse ist eine zweite Andruckrolle gelagert, deren Drehachse parallel zur Drehachse der ersten Andruckrolle angeordnet ist, wobei der Keil zwischen erster und zweiter Andruckrolle geführt ist. Die Andruckrollen weisen bevorzugt jeweils zwei anteilige Andruckrollen auf, die beidseitig der Spindel angeordnet sind.

In der ersten Ausführungsform ist bevorzugt eine Druckfeder am Kolben angeordnet, die dem auf den Kolben wirkenden Druck entgegen wirkt. Entsprechend kann diese Druckfeder als Rückstellfeder für die Betriebsbremse bezeichnet werden. Bevorzugt ist die Druckfeder in dieser Ausführungsform zwischen einem Federanschlag, der ortsfest am Gehäuse angebracht ist, und dem Kolben angeordnet, insbesondere senkrecht zur Spindelachse. Der Federanschlag für die Druckfeder kann angrenzend an die Spindelmutter angeordnet sein und z.B. einen Teil der Führung für die Spindelmutter in dem Gehäuse bilden. Optional ist die Führung für die Spindelmutter zwischen einer Wand des Gehäuses und dem Federanschlag angeordnet oder wird durch eine Wand des Gehäuses und den Federanschlag gebildet.

In einer zweiten Ausführungsform ist der Kolben an der Spindelmutter angeordnet und kann mit der Spindelmutter fest verbunden sein oder einstückig mit der Spindelmutter ausgebildet sein. Der Wegaufnehmer kann daher eingerichtet sein, den Weg des Kolbens gegenüber dem Gehäuse zu messen. Der Kolben ist in einem Zylinder geführt, der parallel zur linearen Bewegungsachse angeordnet ist, z.B. koaxial zur Spindelachse bzw. zur linearen Bewegungsachse. Der Zylinder ist in einem ersten Abschnitt des Gehäuses angeordnet und eingerichtet, den Kolben bei Druckbeaufschlagung in Richtung auf das erste Ende des Gehäuses zu belasten. Der Zylinder kann einstückig in dem Gehäuse ausgebildet sein. In dieser Ausführungsform wirkt eine optionale Druckfeder, die zwischen dem ersten Ende des Gehäuses und dem Kolben angeordnet ist, sowohl als Rückstellfeder für die Spindelmutter als auch als Rückstellfeder für den Kolben. Dieser Kolben wirkt als Betriebsbremse, da er bei Beaufschlagung mit Druck die Spindelmutter und damit die Spindel in Richtung auf das erste Ende des Gehäuses belastet.

In den Ausführungsformen der Erfindung ist bevorzugt in dem Gehäuse ein zweiter Kolben in einem zweiten Zylinder koaxial zum Kolben angeordnet. Generell weist der zweite Kolben einen Fortsatz auf, der in einer Stellung, die der zweite Kolben ohne Druckbeaufschlagung einnimmt, gegen den ersten Kolben, der auch als Bremskolben bezeichnet wird, anliegt. Der zweite Zylinder ist eingerichtet, den zweiten Kolben mit Druck zu beaufschlagen, der den zweiten Kolben in Richtung auf das zweite Ende des Gehäuses belastet, so dass bei Beaufschlagung mit Druck der zweite Kolben vom ersten Kolben weg bewegt wird und keine Kraft auf den ersten Kolben bzw. Bremskolben ausübt. Eine Druckfeder ist zwischen dem zweiten Kolben und dem zweiten Ende des Gehäuses angeordnet, die den zweiten Kolben in Richtung auf den ersten Kolben belastet, so dass der Fortsatz des zweiten Kolbens gegen den ersten Kolben belastet wird. Daher wirkt der zweite Kolben als Feststellbremse, die ohne anliegenden Druck durch die Druckfeder, die den zweiten Kolben in Richtung auf den ersten Kolben belastet, die Spindelmutter gegen das erste Ende des Gehäuses belastet. Generell ist der zweite Kolben auf seiner dem Bremskolben zugewandten Kolbenfläche mit Druck beaufschlagbar und durch eine zweite Druckfeder in Richtung auf den Bremskolben belastet, wobei der zweite Kolben einen Fortsatz aufweist, der in dem Zustand ohne Druckbeaufschlagung durch die zweite Druckfeder den Bremskolben belastet. In der ersten Ausführungsform ist die Anordnung aus Bremskolben und zweitem Kolben an dem Keil angeordnet, um diesen in Richtung auf den Zwischenraum zwischen den Andruckrollen zu belasten. In der zweiten Ausführungsform sind der Bremskolben und der zweite Kolben bevorzugt koaxial zur linearen Bewegungsachse bzw. koaxial zur Spindelachse angeordnet, wobei der Bremskolben an der Spindelmutter festgelegt ist.

Generell können der Bremskolben und der zweite Kolben entlang einer gemeinsamen Bewegungsachse angeordnet sein. In der zweiten Ausführungsform ist der zweite Kolben bevorzugt verschieblich auf der Spindel angeordnet und weiter bevorzugt sind beide Kolben bzw. Zylinder koaxial zur linearen Bewegungsachse bzw. zur Spindelachse angeordnet.

Bevorzugt ist der Fortsatz des zweiten Kolbens rohrförmig und koaxial zur Spindelachse angeordnet. Optional erstrecken sich die kopfseitigen Wände beider Zylinder etwa radial zur Spindelachse bzw. radial zur linearen Bewegungsachse. Diese Ausführungsform wird in den Figuren mit Bezug auf die zweite Ausführungsform gezeigt, bei der der zweite Kolben überdies koaxial zur Spindelachse bzw. zur linearen Bewegungsachse angeordnet ist.

Die Erfindung wird nun genauer mit Bezug auf die Figuren beschrieben, die schematisch in
- Figur 1 eine Schnittansicht einer Ausführungsform der erfindungsgemäßen Krafterzeugungseinrichtung in einer Stellung des Kolbens ohne Druckbeaufschlagung,
- Figur 2 eine um 90° gedrehte Schnittansicht von Figur 1,
- Figur 3 eine Schnittansicht der Ausführungsform von Figur 1 in einer Stellung des Kolbens mit Druckbeaufschlagung,
- Figur 4 um 90° gedrehte Schnittansicht von Figur 3 und in
- Figur 5 eine Schnittansicht einer Ausführungsform der der erfindungsgemäßen Krafterzeugungseinrichtung zeigen.

In den Figuren bezeichnen gleiche Bezugsziffern funktionsgleiche Elemente. Die Arme der Bremszange sind nicht gezeigt. Die Figuren zeigen den Sensor sowohl in der ersten Variante als Wegaufhehmer 21 zwischen Spindelmutter 19 und Gehäuse 4 als auch in der zweiten Variante als Kraftsensor 13 zwischen dem ersten Träger 1 und der Spindel 12. Der erste Träger 1 und der zweite Träger 2, die auf einer gemeinsamen linearen Bewegungsachse 3 am Gehäuse 4 angeordnet sind, sind zur Anlenkung an jeweils einem Zangenarm einer Bremse vorgesehen.

Der zweite Träger 2 ist an dem zweiten Ende 6 des Gehäuses 4 angeordnet, das dessen erstem Ende 6 gegenüberliegt. Die von der Krafterzeugungseinrichtung erzeugte Kraft, die den ersten Träger 1 in eine Richtung vom zweiten Träger 2 weg belastet, kann daher zur Spreizung zweier Zangenarme an deren Enden angelenkt sein, an deren gegenüberliegenden Enden Bremsbacken angebracht sind und die zwischen ihren Enden aneinander angelenkt sind.

Der erste Träger 1 ist am ersten Ende 5 des Gehäuses 4 angeordnet und weist einen Stumpf 7 auf, der in einer Führung 8 geführt ist, die sich entlang der linearen Bewegungsachse 3 am ersten Ende 5 des Gehäuses 4 erstreckt. Der Stumpf 7 ist verdrehsicher entlang der linearen Bewegungsachse 3 in der Führung 8 geführt, z.B. durch eine Längsnut 9 im Stumpf 7, in die ein am ersten Ende 5, z.B. in der Führung 8, festgelegter Stift 10 verschieblich eingreift.

Das erste Ende 11 der Spindel 12 ist drehbar am Stumpf 7 gelagert, z.B. ist der Stumpf 7 in einem koaxialen Sackloch der Spindel 12 angeordnet. Da der Stumpf 7 gegen Drehung gesichert längsverschieblich in der Führung 8 am ersten Ende 5 des Gehäuses geführt ist, kann sich die Spindel 12 gegenüber dem Stumpf 7 drehen.

Entsprechend einer bevorzugten Ausführung ist ein Kraftsensor 13 zwischen der Spindel 12 und dem Stumpf 6 des ersten Trägers 1 angeordnet, um die Kraft zu messen, mit der die Spindel 12 gegen den Stumpf 7 belastet wird.

Bevorzugt ist die Führung 8 rotationssymmetrisch zur linearen Bewegungsachse 3, z.B. eine Bohrung am ersten Ende 5 des Gehäuses 4, und das erste Ende 11 der Spindel 12 ist drehbar und längsverschieblich in der Führung 8 geführt.

Das dem ersten Ende 11 gegenüberliegende zweite Ende 14 der Spindel 12 ist längsverschieblich und drehfest mit dem Wellenstumpf 15 eines Elektromotors 16 verbunden, der am zweiten Ende 6 des Gehäuses 4 festgelegt ist. In der in den Figuren gezeigten Ausführung ist der Wellenstumpf 15 koaxial in einem Sackloch im zweiten Ende der Spindel 12 längsverschieblich der linearen Bewegungsachse 3 angeordnet, die bevorzugt generell gleich der Spindelachse ist. Der Wellenstumpf 15 weist Zapfen 17 auf, die in längs der Spindel 12 angeordneten Längsschlitzen 18 geführt sind. Auf diese Weise kann der Elektromotor 16 mittels seines Wellenstumpfs 15 die Spindel 12 drehen, während sich die Spindel 12 in der verdrehfest und verschieblich am Gehäuse geführten Spindelmutter 19 dreht und sich entlang der linearen Bewegungsachse 3 bewegt. Zwischen der Spindelmutter 19 und dem ersten Ende 5 des Gehäuses 4 ist eine Druckfeder 20 angeordnet, die die Spindelmutter 19 in Richtung auf das zweite Ende 6 des Gehäuses 4 belastet.

In dem Gehäuse 4 ist entsprechend der ersten Variante als Sensor ein Wegaufnehmer 21 angeordnet, der eingerichtet ist, den Weg der Spindelmutter 19 entlang der linearen Bewegungsachse 3 zu messen. Der Wegaufnehmer 21 ist mit einem Mikrokontroller 22, der z.B. ein elektronischer Rechner ist, zur Übertragung eines Signals für die Bewegung bzw. Stellung der Spindelmutter 19 im Gehäuse 4 verbunden. Der Wegaufhehmer 21 kann, wie in den Figuren gezeigt, zwischen dem Gehäuse 4 und der Seite des Kolbens 23 angeordnet sein, die dem Zylinder 28 abgewandt ist.

Der Mikrokontroller 22 ist zur Übertragung eines Steuersignals mit dem Elektromotor 16 verbunden, wobei der Mikrokontroller 22 eingerichtet ist, das Steuersignal abhängig von dem Signal des Wegaufhehmers 22 zu erzeugen. Insbesondere ist der Mikrokontroller 22 eingerichtet, vom Wegaufhehmer 21 übermittelte Signale für die Bewegung bzw. Stellung der Spindelmutter 19 im Gehäuse 4 mit einem vorgegebenen Betrag für die Bewegung bzw. Stellung der Spindelmutter 19 zu vergleichen und den Elektromotor 16 abhängig von diesem Vergleich zu steuern. Dabei kann der Mikrokontroller 22 eingerichtet sein, den Elektromotor 16 so zu steuern, dass dieser die Spindel 12 dreht, bis die Spindel 12 gegenüber der Spindelmutter 19 um den Betrag bewegt ist, der sich aus diesem Vergleich ergibt.

Die Krafterzeugungseinrichtung enthält daher einen Verschleißnachsteller, der mit der Spindel 12, deren erstes Ende 11 drehbar an dem Stumpf 7 des ersten Trägers 1 gelagert ist, der längs der linearen Bewegungsachse 3 verschieblich und drehfest im Gehäuse 4 geführten Spindelmutter 12, dem Wegaufnehmer 21 als Sensor, der den Weg der Spindelmutter 19 gegenüber dem Gehäuse 4 bestimmt, und dem abhängig von einem Signal des Wegaufhehmers 21 gesteuerten Elektromotors 16, der ortsfest in dem Gehäuse 4 angeordnet ist und dessen Wellenstumpf 15 koaxial, längsverschieblich und drehfest mit dem zweiten Ende 14 der Spindel 12 verbunden ist, gebildet wird oder daraus besteht. In Alternative zu dem als Wegaufnehmer 21 gebildeten Sensor kann der Sensor durch den Kraftsensor 13 gebildet sein, der zwischen der Spindel 12 und dem Stumpf 7 angeordnet ist, wobei der Elektromotor 16 durch einen Mikrokontroller 22 gesteuert ist, die Spindel 12 zu drehen, bis der Kraftsensor 13 eine steil ansteigende Kraft als Signal aufnimmt.

Bei der Verschiebung der Spindel 12 in Richtung zum ersten Ende 5 des Gehäuses 4 bewegen sich die Längsschlitze 18 am zweiten Ende 14 der Spindel 12 entlang der Zapfen 17. Die Zapfen 17 erlauben eine Drehung der Spindel 12 durch den Wellenstumpf 15 des Elektromotors 16.

Die zweite Variante des Sensors ist durch den Kraftsensor 13 dargestellt, der die Kraft zwischen dem ersten Ende 11 der Spindel 12 und dem Stumpf 7 des ersten Trägers 1 aufnimmt. In einem Zustand der Bremse, in dem der Kolben 23 nicht mit Druck beaufschlagt wird, der gegen die Spindelmutter wirkt, ist der Mikrokontroller 22 eingerichtet, den Elektromotor 16 zur Drehung der Spindel 12 zu steuern, bis der Kraftsensor 13 eine von der Spindel 12 auf den Stumpf 7 wirkende Kraft aufnimmt. Dieser Zustand der Bremse ist z.B. einer der Abwesenheit von Druck auf den Kolben 23 im Zylinder 28 und der Abwesenheit von Druck durch einen zweiten Zylinder 30, der mittels eines Fortsatzes 32 den Kolben 23 belastet, der z.B. durch eine zweite Druckfeder 31 angetrieben ist. Die Kraft ist bevorzugt eine, die während der Drehung der Spindel steil ansteigt und so das Anliegen von Bremsbelägen, die auf den Bremsbacken angebracht sind, an einer Bremsscheibe anzeigen und z.B. nicht durch Reibungskräfte innerhalb der Bremse verursacht werden. Dabei ist der Mikrokontroller 22 eingerichtet, bei dem Signal des Kraftsensors 13 für eine steil ansteigende Kraft zwischen der Spindel 12 und dem Stumpf 7 des ersten Trägers 1 den Elektromotor 16 zu stoppen und anschließend zur Drehung der Spindel 12 in Gegenrichtung um einen vorbestimmten Betrag zu steuern, um die Bremsbeläge von der Bremsscheibe zu beabstanden. Der vorbestimmte Betrag für den Abstand ist derjenige, um den die Bremsbacken bzw. Bremsbeläge durch die Wirkung des Bremskolbens 23 aufeinander zu und gegen die Bremsscheibe bewegt werden.

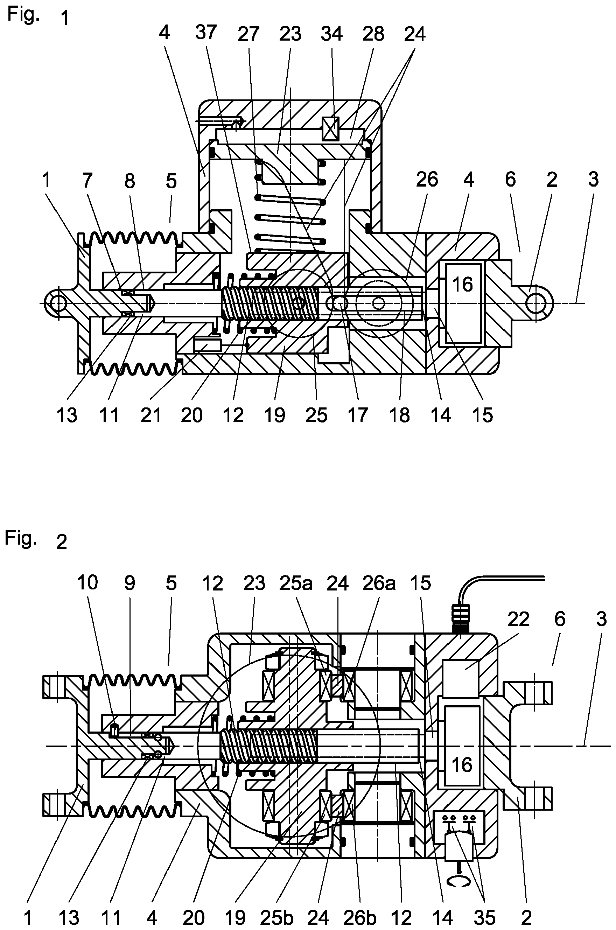

Die Figuren 1 bis 4 zeigen den Antrieb der Spindelmutter 19 bzw. der mit der Spindelmutter 19 verbundenen Spindel 12 in der ersten Ausführungsform der erfindungsgemäßen Krafterzeugungseinrichtung. Dabei zeigen die Figuren 1 und 2 den Kolben 23, der auch als Bremskolben bezeichnet wird, der mit einem Keil 24 verbunden ist, der zwischen einer ersten Andruckrolle 25, die bevorzugt wie dargestellt von zwei seitlich der Spindel 12 an der Spindelmutter 19 angeordneten Teilrollen 25a, 25b gebildet wird, einerseits und andererseits einer ortsfest am Gehäuse angeordneten zweiten Andruckrolle 26 geführt ist. Die zweite Andruckrolle 26 wird bevorzugt wie dargestellt von zwei Teilrollen 26a, 26b gebildet. Die Drehachsen der ersten Andruckrolle 25 und der zweiten Andruckrollen, bzw. ihrer ersten Teilrollen 25a, 25b bzw. zweiten Teilrollen 26a, 26b, sind senkrecht zur linearen Bewegungsachse 3 bzw. zur Spindelachse angeordnet. Die erste Andruckrolle 25 ist an der Spindelmutter 19 gelagert, so dass die Bewegung des Keils 24 zwischen der ersten Andruckrolle 25 und der zweiten, ortsfesten Andruckrolle 26 eine Verschiebung der Spindelmutter 19 und der Spindel 12 bewirkt, die mit der Spindelmutter 19 in Eingriff steht.

Die Figuren 1 und 2 zeigen den Kolben 23 in der nicht druckbeaufschlagten Stellung, in der der Keil 24 einen geringen Abstand zwischen der ersten Andruckrolle 25 und der zweiten Andruckrolle 26 einstellt. Der Keil 24 ist in der hier gezeigten Ausführung senkrecht gegen die lineare Bewegungsachse 3 bzw. gegen die Spindelachse geführt, entsprechend ist die Mittelachse des Kolbens 23 und des ihn führenden Zylinders 28 senkrecht zur linearen Bewegungsachse 3 bzw. zur Spindelachse angeordnet. Die Druckfeder 27, die zwischen dem am Gehäuse 4 festgelegten Federanschlag 37 und dem Kolben 23 angeordnet ist, belastet den Kolben 23 in seine nicht durch Druck im Zylinder 28 beaufschlagte Stellung, so dass die Druckfeder 27 auch als Rückstellfeder für den Bremskolben 23 bezeichnet werden kann. Die Führung für die Spindelmutter 19 wird in der ersten Ausführungsform optional von der Wand des Gehäuses 4 und dem parallelen Federanschlag 37 gebildet.

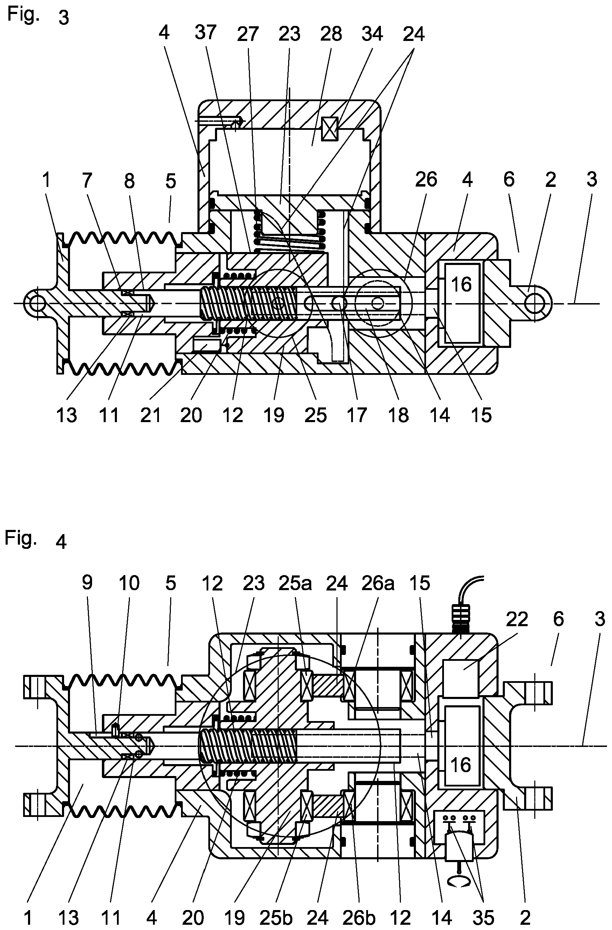

Die Figuren 3 und 4 zeigen den Kolben 23 in der mit Druck im Zylinder 28 beaufschlagten Stellung, in der der Keil 23 die erste Andruckrolle 25 in Richtung auf das erste Ende 5 des Gehäuses 4 bewegt, wobei die Druckfeder 20 zwischen Spindelmutter 19 und dem ersten Ende 5 des Gehäuses 4 komprimiert wird. Die Spindelmutter 19 bewegt die Spindel 12 in Richtung auf das erste Ende 5 des Gehäuses 4, so dass der erste Träger 1 durch seinen Stumpf 7 vom zweiten Träger 2 weg bewegt wird.

Optional ist ein Schalter 35 am Gehäuse angebracht, der zur manuellen Steuerung des Elektromotors 16 eingerichtet ist, um durch diesen die Spindel 12 zu verfahren.

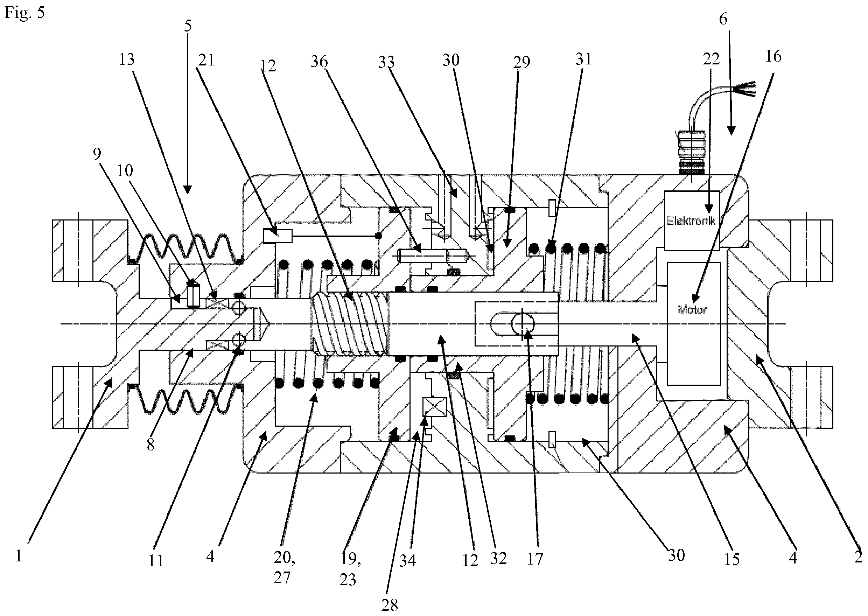

Die Figur 5 zeigt am Beispiel der zweiten Ausführungsform den Antrieb der Spindelmutter 19 bzw. den Antrieb der mit der Spindelmutter 19 verbundenen Spindel 12 der erfindungsgemäßen Krafterzeugungseinrichtung in einer bevorzugten Ausführungsform, die zusätzlich zu dem Bremskolben 23 in einem Zylinder 28 einen zweiten Kolben 29, der in einem Zylinder 30 geführt ist, in dem Gehäuse 4 enthält. Der zweite Kolben 29 ist koaxial zur linearen Bewegungsachse 3 bzw. zur Spindelachse angeordnet und wird von einer zweiten Druckfeder 31 in Richtung auf den Bremskolben 23 belastet, während der zweite Zylinder 31 so angeordnet ist, dass er bei Beaufschlagung mit Druck den zweiten Kolben 29 vom Bremskolben 23 weg und gegen die zweite Druckfeder 31 bewegt. Der zweite Kolben 29 weist einen rohrförmigen Fortsatz 32 auf, der bei Stellung des zweiten Kolbens 29 ohne Beaufschlagung des zweiten Zylinders 31 mit Druck durch die zweite Druckfeder 31 gegen den ersten Kolben belastet ist. In dieser Stellung belastet der zweite Kolben 29 über seinen Fortsatz 32 den Bremskolben 23 und die damit verbundene Spindelmutter 19 und damit die Spindel 12 in Richtung auf das erste Ende 5 des Gehäuses 4, so dass der zweite Kolben 29 ohne Beaufschlagung seines zweiten Zylinders mit Druck als Feststellbremse wirkt.

In der in Figur 5 gezeigten Ausführung ist der Fortsatz 32 des zweiten Kolbens 29 rohrförmig koaxial um die Spindel 12 ausgebildet. Der Zylinder 28, in dem der Bremskolben 23 und die damit verbundene Spindelmutter 19 geführt ist, und der zweite Zylinder 30 sind koaxial zur linearen Bewegungsachse 3 bzw. zur Spindelachse angeordnet, wobei eine zwischen diesen Zylindern angeordnete Wand 33 die Zylinder voneinander trennt und optional jeweils den Zylinderkopf bildet. Die Spindelmutter 19 kann z.B. durch eine Linearführung 36 in Form eines Stifts, der in einer am Gehäuse 4 festgelegten Bohrung geführt ist, gegenüber dem Gehäuse 4 drehfest und verschieblich sein.

In jeder der gezeigten Ausführungsformen ist ein Drucksensor 34 in dem Zylinder 28 angeordnet, in dem der Bremskolben 23 geführt ist bzw. mit Druck beaufschlagt wird, um die Spindelmutter 19 in Richtung auf das erste Ende 5 des Gehäuses 4 anzutreiben.

Generell kann der zweite Träger 2 fest mit dem zweiten Ende 6 des Gehäuses 4 verbunden sein.

**Bezugszeichenliste:**

| | |
|---|---|
| 1 erster Träger | 20 Druckfeder |
| 2 zweiter Träger | 21 Wegaufnehmer |
| 3 lineare Bewegungsachse | 22 Mikrokontroller |
| 4 Gehäuse | 23 Kolben, Bremskolben |
| 5 erstes Ende des Gehäuses | 24 Keil |
| 6 zweites Ende des Gehäuses | 25, 25a, 25b erste Druckrolle |
| 7 Stumpf des ersten Trägers | 26, 26a, 26b zweite Druckrolle |
| 8 Führung am ersten Ende des Gehäuses | 27 Druckfeder, Rückstellfeder für Bremskolben |
| 9 Längsnut | |
| 10 Stift | 28 Zylinder |
| 11 erstes Ende der Spindel | 29 zweiter Kolben |
| 12 Spindel | 30 zweiter Zylinder |
| 13 Kraftsensor | 31 zweite Druckfeder |
| 14 zweites Ende der Spindel | 32 Fortsatz |
| 15 Wellenstumpf | 33 Wand |
| 16 Motor, z.B. Elektromotor | 34 Drucksensor |
| 17 Zapfen | 35 Schalter |
| 18 Längsschlitz | 36 Linearführung |
| 19 Spindelmutter | 37 Federanschlag |

## Patentansprüche

1. Bremse mit zwei Zangenarmen, an deren Enden jeweils Bremsbacken angeordnet sind und zwischen denen eine Krafterzeugungseinrichtung mittels eines ersten Trägers (1) und eines davon beabstandeten zweiten Trägers (2) angelenkt ist, **dadurch gekennzeichnet, dass** der erste und der zweite Träger (1, 2) auf einer gemeinsamen linearen Bewegungsachse (3) angeordnet sind und der erste Träger (1) einen entlang der linearen Bewegungsachse (3) angeordneten Stumpf (7) aufweist, der längsverschieblich und verdrehsicher in einer Führung (8) geführt ist, die am ersten Ende (5) eines Gehäuses (4) angeordnet ist, und der zweite Träger (2) am gegenüberliegenden zweiten Ende (6) des Gehäuses (4) angeordnet ist, wobei ein erstes Ende (11) einer Spindel (12) drehbar am Stumpf (7) gelagert ist, die Spindel (12) koaxial zum Stumpf (7) in dem Gehäuse (4) in einer Spindelmutter (19) geführt ist, die verdrehsicher und parallel zur linearen Bewegungsachse (3) verschieblich in dem Gehäuse (4) geführt ist und die durch einen in dem Gehäuse (4) angeordneten, mit Druck beaufschlagbaren Kolben (23) entlang der linearen Bewegungsachse (3) angetrieben ist, mit einem in dem Gehäuse (4) angeordneten gesteuerten Motor (16), der eingerichtet ist, die Spindel (12) gegen das Gehäuse (4) zu drehen.

2. Bremse nach Anspruch 1, **dadurch gekennzeichnet, dass** sie einen im Gehäuse (4) angeordneten Sensor aufweist, der zur Messung der Stellung der Spindel (12) im Gehäuse (4) in dem Zustand eingerichtet ist, in dem die Bremsbacken einen Abstand voneinander einnehmen, in dem daran angebrachte Bremsbeläge an einer Bremsscheibe anliegen, und dass der Motor (16) abhängig von einem Signal des Sensors für die Stellung der Spindel (12) im Gehäuse (4) gesteuert ist.

3. Bremse nach Anspruch 2, **dadurch gekennzeichnet, dass** der Sensor ein in dem Gehäuse angeordneter Wegaufnehmer (21) ist, der eingerichtet ist, den Weg der Spindelmutter (19) entlang der linearen Bewegungsachse (3) aufzunehmen.

4. Bremse nach Anspruch 2, **dadurch gekennzeichnet, dass** der Sensor ein Kraftsensor (13) ist, der eingerichtet ist, die Kraft zwischen dem ersten Ende (11) der Spindel (12) und dem Stumpf (7) des ersten Trägers (1) aufzunehmen.

5. Bremse nach Anspruch 4, **gekennzeichnet durch** einen Mikrokontroller (22), der eingerichtet ist, in Abwesenheit von Druck auf den Kolben (23) den Motor (16) zur Drehung der Spindel (12) zu steuern, bis der Kraftsensor (13) eine von der Spindel (12) auf den Stumpf (7) wirkende, steil ansteigende Kraft als Signal für einen Abstand der Bremsbacken aufnimmt, in dem daran angebrachte Bremsbeläge an einer Bremsscheibe anliegen, und der Mikrokontroller (22) eingerichtet ist, den Motor (16) zur Drehung der Spindel (12) in Gegenrichtung um einen vorbestimmten Betrag zu steuern.

6. Bremse nach einem der voranstehenden Ansprüche, **dadurch gekennzeichnet, dass** die Träger (1, 2) der Krafterzeugungseinrichtung jeweils endständig an den Zangenarmen angeordnet sind, die zwischen der Krafterzeugungseinrichtung und den Bremsbacken mittels eines Gelenks schwenkbar aneinander angelenkt sind.

7. Bremse nach einem der voranstehenden Ansprüche, **dadurch gekennzeichnet, dass** der Motor (16) ortsfest in dem Gehäuse (4) festgelegt ist und mit der Spindel (12) mittels eines Wellenstumpfs (15) verbunden ist, der entlang der linearen Bewegungsachse (3) angeordnet ist und längsverschieblich und drehfest mit der Spindel (12) verbunden ist.

8. Bremse nach einem der voranstehenden Ansprüche, **dadurch gekennzeichnet, dass** an der Spindelmutter (19) eine erste Andruckrolle (25, 25a, 25b) gelagert ist, deren Drehachse senkrecht zur linearen Bewegungsachse (3) angeordnet ist und eine von der ersten Andruckrolle (25, 25a, 25b) beabstandete zweite Andruckrolle (26, 26a, 26b), deren Drehachse parallel zur Drehachse der ersten Andruckrolle (25, 25a, 25b) ist, ortsfest am Gehäuse (4) gelagert ist, wobei der Kolben (23) mit einem Keil (24) verbunden ist, der zwischen der ersten (25, 25a, 25b) und der zweiten Andruckrolle (26, 26a, 26b) geführt ist.

9. Bremse nach einem der Ansprüche 1 bis 7, **dadurch gekennzeichnet, dass** der Kolben (23) an der Spindelmutter (19) angeordnet ist und in einem Zylinder (28) geführt ist, der parallel zur linearen Bewegungsachse (3) angeordnet ist und in einem Abschnitt des Gehäuses (4) gebildet ist, der zwischen dem Kolben (23) und dem zweiten Ende (6) des Gehäuses (4) angeordnet ist.

10. Bremse nach einem der voranstehenden Ansprüche, **dadurch gekennzeichnet, dass** die Spindelmutter (19) von einer Druckfeder (20) belastet ist, die zwischen der Spindelmutter (19) und dem ersten Ende (5) des Gehäuses (4) angeordnet ist.

11. Bremse nach einem der voranstehenden Ansprüche, **dadurch gekennzeichnet, dass** der Kolben (23) von einer Druckfeder (27) gegen die Richtung belastet ist, in die er durch Druckbeaufschlagung belastet ist.

12. Bremse nach einem der voranstehenden Ansprüche, **dadurch gekennzeichnet, dass** ein zweiter Kolben (29), der in einem zweiten Zylinder (30) geführt ist, auf seiner dem Kolben (23) zugewandten Kolbenfläche mit Druck beaufschlagbar ist und durch eine zweite Druckfeder (31) in Richtung auf den Kolben (23) belastet wird, wobei der zweite Kolben (29) einen Fortsatz (32) aufweist, der in dem Zustand ohne Druckbeaufschlagung des zweiten Zylinders (30) durch die zweite Druckfeder (31) gegen den Kolben (23) belastet wird.

13. Bremse nach Anspruch 12, **dadurch gekennzeichnet, dass** der zweite Kolben (29) in einem zweiten Abschnitt des Gehäuses (4), der zwischen dem Zylinder (28), in dem der an der Spindelmutter (19) angeordnete Kolben (23) geführt ist und dem zweiten Ende (6) des Gehäuses (4) angeordnet ist, verschieblich auf der Spindel (12) angeordnet ist und dass sich der Fortsatz (32) des zweiten Kolbens (29) entlang der Spindel (12) erstreckt.

14. Bremse nach einem der Ansprüche 3 bis 13, **dadurch gekennzeichnet, dass** der Motor (16) gesteuert ist, die Spindel (12) bei Überschreitung eines vorgegebenen Werts für den Weg der Spindelmutter (19) durch den von dem Wegaufnehmer (21) aufgenommenen Weg der Spindelmutter (19) zu drehen, bis die Spindelmutter (19) um den Betrag der Überschreitung in Richtung auf das erste Ende (11) der Spindel (12) bewegt ist.

15. Bremse nach einem der Ansprüche 9 bis 14, **dadurch gekennzeichnet, dass** zwischen dem Stumpf (7) des ersten Trägers (1) und der Spindel (12) ein Kraftsensor (13) angeordnet ist, dass ein Drucksensor (34) in dem Zylinder (28) angeordnet ist, in dem der an der Spindelmutter (19) angeordnete Kolben (23) geführt ist und dass ein Mikrokontroller (22) eingerichtet ist, das Signal des Kraftsensors (13) mit dem Signal des Drucksensors (34) zu vergleichen.

16. Bremse nach einem der voranstehenden Ansprüche, **dadurch gekennzeichnet, dass** der Motor (16) mit einer Steuerung zur Drehung der Spindel (12) in eine Stellung geringsten Abstands zum zweiten Ende (6) des Gehäuses (4) versehen ist.

17. Bremse nach einem der voranstehenden Ansprüche, **gekennzeichnet durch** einen Mikrokontroller (22), der eingerichtet ist, die jeweiligen Wege, um die die Spindel (12) durch Drehung mittels des Motors (16) bewegt wird, aufzuaddieren und als Maß für den Verschleiß von Bremsbelägen der Bremse zu übermitteln.

18. Bremse nach einem der voranstehenden Ansprüche, **gekennzeichnet durch** einen Mikrokontroller (22), der eingerichtet ist, den Weg, um den die Spindel (12) bei Anordnung von Bremsbelägen bekannter Dicke an den Bremsbacken durch Drehung mittels des Motors (16) bewegt wird, als Maß für den Verschleiß einer zwischen den Bremsbelägen angeordneten Bremsscheibe zu übermitteln.

19. Bremse nach einem der voranstehenden Ansprüche, **dadurch gekennzeichnet, dass** der Motor (16) elektrischer, hydraulischer oder pneumatischer Drehantrieb oder Linearantrieb ist, insbesondere ein Elektromotor, ein Pneumatikzylinder, ein pneumatischer Motor oder ein Hydraulikzylinder oder ein hydraulischer Motor.

## Claims

1. Brake having two caliper arms at the ends of which brake shoes are respectively arranged and between which a force generating device is pivoted by means of a first carrier (1) and a second carrier (2) spaced therefrom, **characterized in that** the first and the second carriers (1, 2) are arranged on a common linear axis of movement (3) and the first carrier (1) has a stub (7) arranged along the linear axis of movement (3), which is guided in a guidance (8) longitudinally slidable and torque-proof, which guidance (8) is arranged on the first end (5) of a housing (4), and the second carrier (2) is arranged on the opposite second end (6) of the housing (4), wherein a first end (11) of a spindle (12) is rotationally supported on the stub (7), the spindle (12) is guided coaxially to the stub (7) in the housing (4) in a spindle nut (19), which is guided torque-proof and in parallel to the linear axis of movement (3) slidably in the housing (4) and which is driven along the linear axis of movement (3) by a piston (23) arranged in the housing (4), to which pressure can be applied, having a controlled motor (16) arranged in the housing (4), which motor (16) is set up to turn the spindle (12) against the housing (4).

2. Brake according to claim 1, **characterized in that** in the housing (4) there is arranged a sensor which is set up for measuring the position of the spindle (12) within the housing (4) in the state in which the brake shoes are arranged in a distance from one another, in which brake pads fixed thereto lie against a brake disc, and that the motor (16) is controlled in dependence on a signal of the sensor for the position of the spindle (12) in the housing (4).

3. Brake according to claim 2, **characterized in that** the sensor is a displacement transducer (21) arranged in the housing and which is set up to sense the path of the spindle nut (19) along the linear axis of movement (3).

4. Brake according to claim 2, **characterized in that** the sensor is a force sensor (13) which is set up to sense the force between the first end (11) of the spindle (12) and the stub (7) of the first carrier (1).

5. Brake according to claim 4, **characterized by** a microcontroller (22), which is set up to control the motor (16) for turning the spindle (12) in the absence of pressure onto the piston (23) until the force sensor (13) senses a steeply increasing force acting from the spindle (12) onto the stub (7) as a signal for the distance of the brake shoes, in which distance brake pads attached thereto lie against a brake disc, and the microcontroller (22) is set up to control the motor (16) for turning the spindle (12) in counter direction for a predetermined amount.

6. Brake according to one of the preceding claims, **characterized in that** the carriers (1, 2) of the force generating device are each arranged terminally on the caliper arms which are pivoted by means of a joint between the force generating device and the brake shoes.

7. Brake according to one of the preceding claims, **characterized in that** the motor (16) is arranged stationary in the housing (4) and is connected to the spindle (12) by means of a shaft end (15), which is arranged along the linear axis of movement (3) and is connected to the spindle (12) longitudinally slidable and torque-proof.

8. Brake according to one of the preceding claims, **characterized in that** on the spindle nut (19) a first pressure roller (25, 25a, 25b) is supported, the rotating axis of which is arranged perpendicularly to the linear axis of movement (3) and with a spacing from the first pressure roller (25, 25a, 25b) a second pressure roller (26, 26a, 26b) is supported stationary on the housing (4), the rotating axis of the second roller being in parallel to the rotating axis of the first pressure roller (25, 25a, 25b), wherein the piston (23) is connected to a wedge (24) which is guided between the first (25, 25a, 25b) and the second pressure rollers (26, 26a, 26b).

9. Brake according to one of claims 1 to 7, **characterized in that** the piston (23) is arranged on the spindle nut (19) and is guided in a cylinder (28) which is arranged in parallel to the linear axis of movement (3) and is formed in a section of the housing (4) arranged between the piston (23) and the second end (6) of the housing (4).

10. Brake according to one of the preceding claims, **characterized in that** the spindle nut (19) is loaded by a pressure spring (20), which is arranged between the spindle nut (90) and the first end (5) of the housing (4).

11. Brake according to one of the preceding claims, **characterized in that** the piston (23) is loaded by a pressure spring (27) against the direction in which it is loaded by application of pressure.

12. Brake according to one of the preceding claims, **characterized in that** a second piston (29) which is guided in a second cylinder (30) can be applied with pressure on its piston face facing the piston (23) and is loaded by a second pressure spring (31) in the direction towards the piston (23), wherein the second piston (29) has an extension (32) which in the state without application of pressure onto the second cylinder (30) is loaded by the second pressure spring (31) against the piston (23).

13. Brake according to claim 12, **characterized in that** the second piston (29) is arranged slidably on the spindle (12) in a second section of the housing (4), which is arranged between the cylinder (28) in which the piston (23) arranged on the spindle nut (19) is guided, and the second end (6) of the housing (4), and that the extension (32) of the second piston (29) extends along the spindle (12).

14. Brake according to one of claims 3 to 13, **characterized in that** the motor (16) is controlled to turn the spindle (12) when the displacement of the spindle nut (19) sensed by the displacement transducer (21) exceeds a predetermined value for the displacement of the spindle nut (19), until the spindle nut (19) is moved for the amount of the exceeding in the direction towards the first end (11) of the spindle (12).

15. Brake according to one of claims 9 to 14, **characterized in that** between the stub (7) of the first carrier (1) and the spindle (12) a force sensor (13) is arranged, and that a pressure sensor (34) is arranged in the cylinder (28), in which the piston (23) arranged on the spindle nut (19) is guided, and that a microcontroller (22) is set up to compare the signal of the force sensor (13) to the signal of the pressure sensor (34).

16. Brake according to one of the preceding claims, **characterized in that** the motor (16) is provided with a control for turning the spindle (12) into a position of smallest spacing from the second end (6) of the housing (4).

17. Brake according to one of the preceding claims, **characterized by** a microcontroller (22) which is set up to add up the respective displacements, by which the spindle (12) is moved by rotation by means of the motor (16) and to transmit these as a measure for the wear of the brake pads of the brake.

18. Brake according to one of the preceding claims, **characterized by** a microcontroller (22) which is set up to transmit the displacement by which the spindle (12) is moved by rotation by means of the motor (16) upon arrangement of brake pads of known thickness on the brake shoes as a measure for the wear of a brake disc arranged between the brake pads.

19. Brake according to one of the preceding claims, **characterized in that** the motor (16) is an electric, hydraulic or pneumatic rotary drive or a linear drive, especially an electric motor, a pneumatic cylinder, a pneumatic motor or a hydraulic cylinder or a hydraulic motor.

## Revendications

1. Frein muni de deux bras de pince, aux extrémités desquels des mâchoires de frein sont respectivement prévues et entre lesquels un dispositif de génération de force est articulé à l'aide d'un premier support (1) et un second support (2) espacé de celui-ci, **caractérisé en ce que** le premier support et le second support (1, 2) sont agencés au niveau d'un axe de mouvement linéaire commun (3) et le premier support (1) présente un tronçon (7) disposé le long de l'axe de mouvement linéaire (3), qui est guidé mobile dans le sens de la longueur et sans possibilité de rotation dans un guidage (8), guidé agencé au niveau d'une première extrémité (5) d'un logement (4), et le second support (2) est agencé au niveau d'une seconde extrémité opposée (6) du logement (4), tandis qu'une première extrémité (11) d'une broche (12) repose sur le tronçon (7) de manière rotative, la broche (12) est guidée de manière coaxiale vers le tronçon (7) dans le logement (4) dans un écrou de broche (19), écrou de broche guidé sans possibilité de rotation et parallèle à l'axe de mouvement linéaire (3), de manière mobile dans le logement (4) et entraîné le long de l'axe de mouvement linéaire (3) par un piston (23) soumis à une pression, disposé dans le logement (4), à l'aide d'un moteur (16) actionné et disposé dans le logement (16), moteur conçu pour faire tourner la broche (12) contre le logement (4).

2. Frein selon la revendication 1, **caractérisé en ce qu'**il présente un capteur disposé dans le logement (4), capteur conçu pour mesurer la position de la broche (12) dans le logement (4) dans le cas de figure dans lequel les mâchoires de frein sont situées à une certaine distance de sorte que les garnitures de frein posées sur celles-ci appuient sur un disque de frein et **caractérisé en ce que** le moteur (16) est actionné en fonction d'un signal du capteur pour déterminer la position de la broche (12) dans le logement (4).

3. Frein selon la revendication 2, **caractérisé en ce que** le capteur est un capteur de déplacement (21) agencé dans le logement, lequel est agencé pour enregistrer la course de l'écrou de broche (19) le long de l'axe de mouvement linéaire (3).

4. Frein selon la revendication 2, **caractérisé en ce que** le capteur est un capteur de force (13) conçu pour enregistrer la force exercée entre la première extrémité (11) de la broche (12) et le tronçon (7) du premier support (1).

5. Frein selon la revendication 4, **caractérisé par** un microcontrôleur (22) conçu pour commander le moteur (16) pour assurer la rotation de la broche (12) en l'absence de pression sur le piston (23), jusqu'à ce que le capteur de force (13) enregistre une force en progression rapide agissant sur le tronçon (7) à partir de la broche (7) comme signal correspondant à la distance séparant les mâchoires de frein, de sorte que les garnitures de frein posées sur celles-ci appuient sur un disque de frein, et le microcontrôleur (22) est agencé pour commander le moteur (16) et assurer la rotation de la broche (12) dans le sens opposé et ce, d'un degré prédéterminé.

6. Frein selon l'une des revendications précédentes, **caractérisé en ce que** les supports (1, 2) du dispositif de génération de force sont agencés respectivement aux extrémités des bras de pince, lesquels bras sont articulés entre le dispositif de génération de force et les mâchoires de frein à l'aide d'un pivot, de manière orientable l'un par rapport à l'autre.

7. Frein selon l'une des revendications précédentes, **caractérisé en ce que** le moteur (16) est fixé à demeure dans le logement (4) et connecté à la broche (12) à l'aide d'un arbre de montage (15), agencé le long de l'axe de mouvement linéaire (3), mobile dans le sens de la longueur et connecté à la broche (12) avec blocage en rotation.

8. Frein selon l'une des revendications précédentes, **caractérisé en ce qu'**un premier galet de pression (25, 25 a, 25b) est prévu sur l'écrou de broche (10), dont l'axe de rotation est vertical par rapport à l'axe de mouvement linéaire (3) et un second galet de pression (26, 26a, 26b), à une certaine distance du premier galet de pression (25, 25a, 25b) est fixé à demeure sur le logement (4), second galet de pression dont l'axe de rotation est parallèle à l'axe de rotation du premier galet de pression (25, 25a, 25b), tandis que le piston (23) est connecté à une cale (24) guidée entre le premier galet de pression (25, 25 a, 25b) et le second galet de pression (26, 26a, 26b).

9. Frein selon l'une des revendications 1 à 7, **caractérisé en ce que** le piston (23) est agencé dans l'écrou de broche (19) et guidé dans un cylindre (28), agencé parallèle à l'axe de mouvement linéaire (3) et constitué dans une section du logement (4), entre le piston (23) et la seconde extrémité (6) du logement (4).

10. Frein selon l'une des revendications précédentes, **caractérisé en ce que** l'écrou de broche (19) est contraint par un ressort à pression (20) disposé entre l'écrou de broche (19) et la première extrémité (5) du logement (4).

11. Frein selon l'une des revendications précédentes, **caractérisé en ce que** le piston (23) est contraint par un ressort à pression (27) dans la direction opposée à celle de la pression imprimée.

12. Frein selon l'une des revendications précédentes, **caractérisé en ce qu'**un second piston (29), guidé dans un second cylindre (30), peut être soumis à une pression sur sa surface dirigée vers le piston (23) et est contraint par un second ressort à pression (31) dans la direction du piston (23), tandis que le second piston (29) présente un prolongement (32) qui est contraint par le second ressort à pression (31) contre le piston (23), lorsque le second cylindre (30) n'est soumis à aucune pression.

13. Frein selon la revendication 12, **caractérisé en ce que** le second piston (29) est agencé mobile contre la broche, dans une seconde section du logement (4), prévu entre le cylindre (28), dans lequel est guidé le piston (23) contre l'écrou de broche (19), et la seconde extrémité (6) du logement (4) et que le prolongement (32) du second piston (29) longe la broche (12).

14. Frein selon l'une des revendications 3 à 13, **caractérisé en ce que** le moteur (16) est commandé pour faire tourner la broche (12) en cas de dépassement d'une valeur prédéterminée pour la course de l'écrou de broche (19), sur toute la course de l'écrou de broche (19), course enregistrée par le capteur de déplacement (21), jusqu'à ce que l'écrou de broche (19) ait atteint le degré de dépassement dans la direction de la première extrémité (11) de la broche (12).

15. Frein selon l'une des revendications 9 à 14, **caractérisé en ce qu'**un capteur de force (13) est prévu entre le tronçon (7) du premier support (1) et la broche (12), **en ce qu'**un capteur de pression (34) est prévu dans le cylindre (28) dans lequel est guidé le piston disposé contre l'écrou de broche (19) et **en ce qu'**un microcontrôleur (22) est prévu pour compenser le signal du capteur de force (13) avec le signal du capteur de pression (34).

16. Frein selon l'une des revendications précédentes, **caractérisé en ce que** le moteur (16) est muni d'un système de commande pour assurer la rotation de la broche (12) dans une position présentant une distance minimale par rapport à la seconde extrémité (6) du logement (4).

17. Frein selon l'une des revendications précédentes, **caractérisé par** un microcontrôleur (22), conçu pour cumuler les différentes courses effectuées par la broche (12) soumise à une rotation par le moteur (16) et déterminer l'usure des garnitures de frein.

18. Frein selon l'une des revendications précédentes, **caractérisé par** un microcontrôleur (22), conçu pour déterminer la course correspondant au déplacement de la broche (12) en fonction de la disposition de garnitures de frein d'épaisseur connue, déplacement au niveau des mâchoires de frein sous l'effet de la rotation imprimée par le moteur (16), et déterminer par conséquent l'usure d'un disque de frein disposé entre les garnitures de frein.

19. Frein selon l'une des revendications précédentes, **caractérisé en ce que** le moteur (16) permet un entraînement en rotation ou un entraînement linéaire, électrique, hydraulique ou pneumatique, qu'il s'agit en particulier d'un moteur électrique, d'un vérin pneumatique, d'un moteur pneumatique, d'un vérin hydraulique ou d'un moteur hydraulique.
